Europäisches Patentamt

European Patent Office

Office européen des brevets

(11) Veröffentlichungsnummer: **0 222 080**
**A2**

(12) # EUROPÄISCHE PATENTANMELDUNG

(21) Anmeldenummer: **86111327.2**

(22) Anmeldetag: **16.08.86**

(51) Int. Cl.4: **B01D 53/36** , **F01N 3/28**

(30) Priorität: **11.11.85 DE 3539887**

(43) Veröffentlichungstag der Anmeldung:
**20.05.87 Patentblatt 87/21**

(84) Benannte Vertragsstaaten:
**AT BE CH DE FR GB IT LI LU NL SE**

(71) Anmelder: **DIDIER-WERKE AG**
**Lessingstrasse 16-18**
**D-6200 Wiesbaden(DE)**

(72) Erfinder: **Frey, Alfred**
**Hauptstrasse 51**
**D-6719 Wattenheim(DE)**
Erfinder: **Grimm, Daniel**
**Hauptstrasse 10**
**D-6229 Schlangenbad-Bärstadt(DE)**
Erfinder: **Kainer, Hartmut, Dr.**
**Sauerbruchstrasse 1a**
**D-6200 Wiesbaden 12(DE)**

(74) Vertreter: **Brückner, Raimund**
**c/o Didier-Werke AG Lessingstrasse 16-18**
**D-6200 Wiesbaden(DE)**

(54) **Halterahmen für Katalysatorplatten.**

(57) Ein Halterahmen zur blockartigen, parallelen Aufnahme von Katalysatorplatten soll bei geringem Gewicht einfach aufgebaut und sicher bestückbar sein. Es sind hierfür gegenüberliegende, entsprechend der Breite der Katalysatorplatten 5 beabstandete Rahmenteile 1 bis 4 vorgesehen, die eine Reihe nach oben offener Führungsschlitze 6, 7 für die Katalysatorplatten 5 aufweisen. Unten an den Rahmenteile 3, 4 sind Auflager 11 für die unteren Kanten der Katalysatorplatten 5 vorgesehen. Die Rahmenteile 1 bis 4 bilden zugleich seitliche Anschläge 28 für die Katalysatorplatten 5.

Halterahmen, bestückt mit Katalysator-Platten bilden beim Zusammenfügen beliebig viele Rahmenteile in Modulbauweise die Plattenzwischenräume zu Endlosschlitzen in alle vier Richtungen als Freipassage für ein durchströmendes gasförmiges Medium aus.

Fig. 1

EP 0 222 080 A2

## Halterahmen für Katalysatorplatten

Die Erfindung betrifft einen Halterahmen zur blockartigen, parallelen Aufnahme mehrerer Katalysatorplatten im Abstand zueinander.

Nach dem Stand der Technik sind zur Aufnahme von Katalysatorplatten Kästen vorgesehen, in denen die Platten mittels Stiften geführt und gehaltert sind. Eine exakte Führung der Platten beim Einsetzen ist dabei nicht gewährleistet. Dies führt dazu, daß Katalysatorplatten beim Bestücken des Kastens leicht brechen. Die Bestückung wird dadurch arbeitsaufwendig. Nachteilig ist außerdem das hohe Gewicht einer solchen Anordnung.

Aufgabe der Erfindung ist es, einen Halterahmen der eingangs genannten Art mit einfachem Aufbau und sicherer Bestückungsmöglichkeit vorzuschlagen.

Erfindungsgemäß ist obige Aufgabe bei einem Halterahmen der eingangs genannten Art dadurch gelöst, daß gegenüberliegende, entsprechend der Breite der Katalysatorplatten beabstandete Rahmenteile vorgesehen sind, die eine Reihe nach oben offener Führungsschlitze mit einer der Dicke der Katalysatorplatten entsprechenden Breite aufweisen, daß Auflager für die unteren Kanten der in den Führungsschlitzen stehenden Katalysatorplatten unten an den Rahmenteilen ausgeformt sind und daß die Rahmenteile seitliche Anschläge für die in den Führungsschlitzen stehenden Katalysatorplatten bilden.

Der Halterahmen läßt sich einfach mit den Katalysatorplatten bestücken. Diese werden in die Führungsschlitze eingeschoben und von diesen und den seitlichen Anschlägen geführt, bis sie auf den Auflagern aufstehen. In dem Halterahmen sind die Katalysatorplatten sicher fixiert, ohne mechanisch beansprucht zu sein.

Die mit Katalysatorplatten bestückten Halterahmen können in einem größeren Rahmen zu Großmodulen vereinigt zum Einsatz kommen, oder aber auch im Reaktor selbst gestapelt werden.

Die Rahmenteile sind einfach herzustellen. Sie weisen auch ein geringes Gewicht auf. Insbesondere ist hierfür das Rahmenteil als Hohlkörper aus einem Blech gebogen, wobei die Führungsschlitze durch Ausnehmungen des Blechs und die Anschläge und Auflager durch das Blech selbst gebildet sind.

Vorteilhafte Ausgestaltungen der Erfindung ergeben sich aus den Unteransprüchen und der folgenden Beschreibung von Ausführungsbeispielen.

In den Zeichnungen zeigen:

Fig. 1 Rahmenteile eines Halterahmens in perspektivischer Teilansicht,

Fig. 2 eine Befestigung von Rahmenteilen,

Fig. 3 einen Halterahmen mit aufgesetztem weiteren Halterahmen und anderer Ausgestaltung der Rahmenteile;

Fig. 4 einen Halterahmen nach Fig. 3, im Teilschnitt,

Fig. 5 ein weiteres Ausführungsbeispiel der Rahmenteile zweier übereinandergesetzter Halterahmen,

Fig. 6 eine weitere Ausgestaltung der Rahmenteile nach Fig. 5.

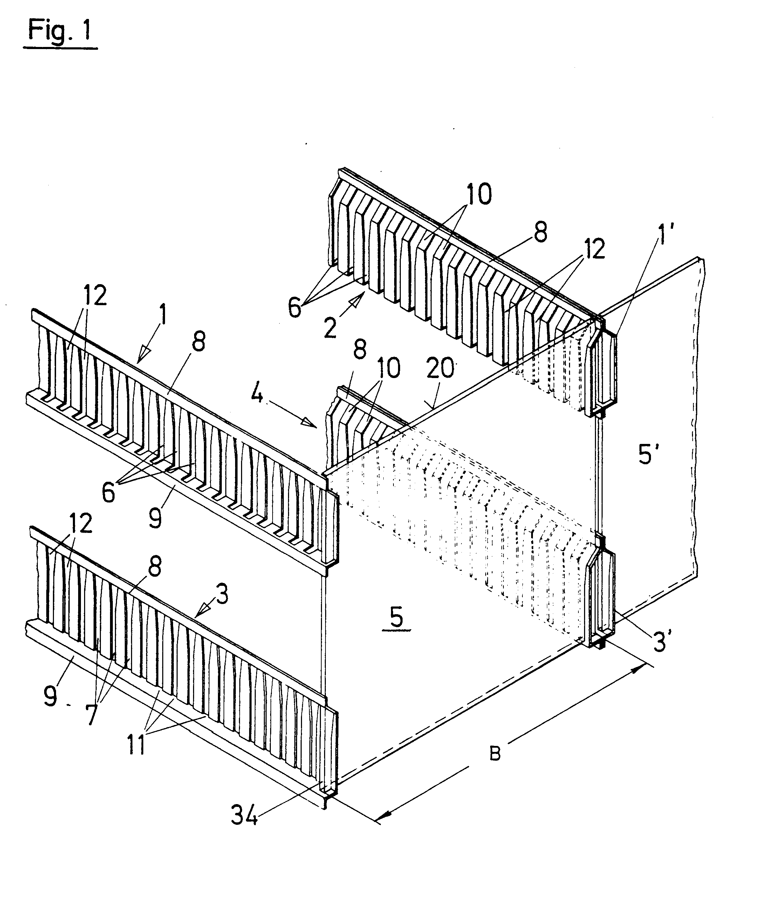

Der Halterahmen weist zwei obere Rahmenteile 1 und 2 und zwei untere Rahmenteile 3 und 4 auf. Die oberen und die unteren Rahmteile sind entsprechend der Breite B der Katalysatorplatten 5, von denen in Fig. 1 eine gezeigt ist, beabstandet. An den oberen Rahmenteile 1 und 2 sind Führungsschlitze 6 ausgebildet. An den unteren Rahmenteilen 3 und 4 sind Führungsschlitze 7 ausgebildet. Die Führungsschlitze 6 der oberen Rahmenteile 1 und 2 fluchten mit den Führungsschlitzen 7 der unteren Rahmenteile 3 und 4.

Die Rahmenteile 1 bis 4 sind Blech-Biegeteile, an denen die Führungsschlitze 6 bzw. 7 vor dem Biegen ausgestanzt sind. Die Rahmenteile 1 bis 4 sind im Profil etwa U-förmig mit Anschlagleisten 8, 9 gebogen. An die obere Anschlagleiste 8 schließt eine Schrägfläche 10 des U-Profils an. Bei den oberen Rahmenteilen 1 und 2 erstrecken sich die Führungsschlitze 6 im wesentlichen über das gesamte U-Profil, so daß sie nach oben und nach unten offen sind. Bei den unteren Rahmenteilen 3 und 4 durchbrechen die Führungsschlitze 7 nicht den an die untere Anschlagleiste 9 angrenzenden Schenkel des U-Profils, so daß dieser Auflager 11 für die Katalysatorplatten 5 bildet. Die Führungsschlitze 6 und 7 weisen in einem oberen Bereich eine nach oben gerichtete Erweiterung 12 auf, die das Einschieben der Katalysatorplatten 5 erleichtert.

Die Anschlagleisten 8 und 9 der oberen Rahmenteile 1 und 2 und die Anschlagleisten 8 und 9 der unteren Rahmenteile 3 und 4 dienen der Formstabilisierung der Rahmenteile und bilden zugleich Anschläge für die eingesetzten Katalysatorplatten 5. Sie können auch zur Befestigung der Rahmenteile in dem ungebenden Blechkasten herangezogen werden.

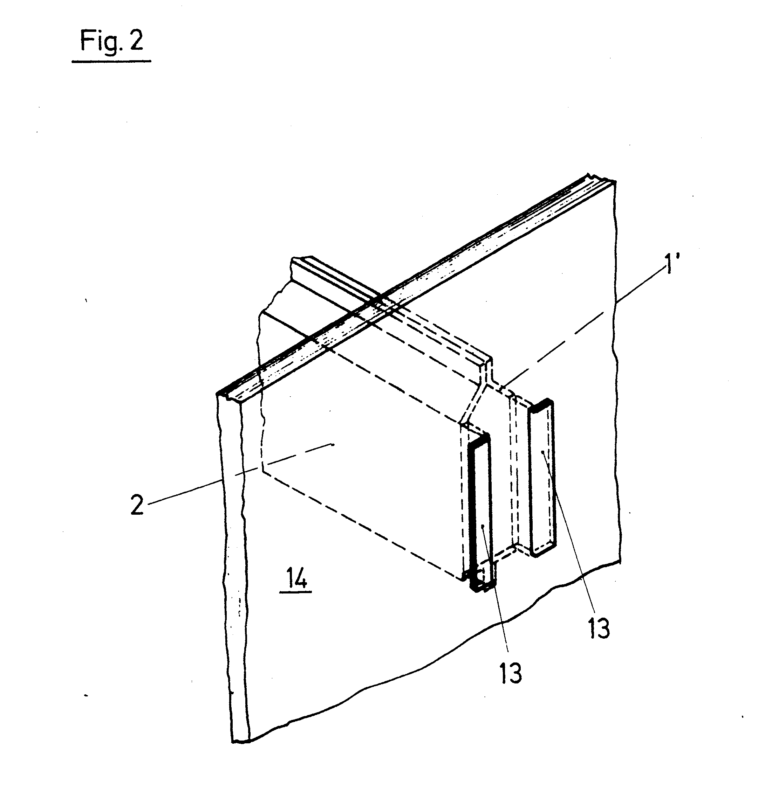

Beim Ausführungsbeispiel nach Fig. 1 und 2 sind das obere Rahmenteil 2 und das untere Rahmenteil 4 mit entsprechend spiegelsymmetrischen weiteren Rahmenteilen 1' und 3' verbunden. Hierfür sind die Anschlagleisten 8 und 9 beispielsweise punktverschweißt. Dadurch ist es möglich, ohne Zwischenwand neben der Katalysatorplatte 5 einen weiteren Block von Katalysatorplatten 5' in den Halterahmen einzusetzen.

Beim Ausführungsbeispiel nach Fig. 2 weisen die Rahmenteile 2, 1' seitlich Laschen 13 auf, die durch Ausnehmungen einer Blechseitenwand 14 gesteckt und umgebogen sind. Nötigenfalls können die Laschen 13 mit der Blechseitenwand 14 punktverschweißt sein. Die Bleckseitenwand 14 stellt dabei den notwendigen Abstand der Rahmenteile untereinander sicher.

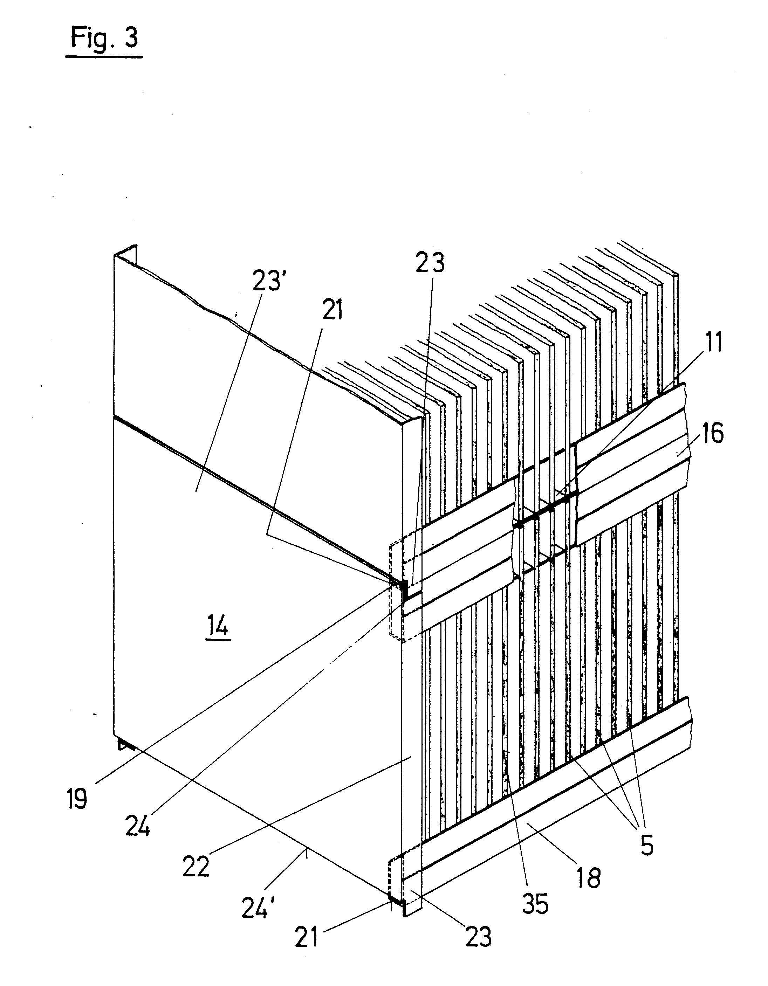

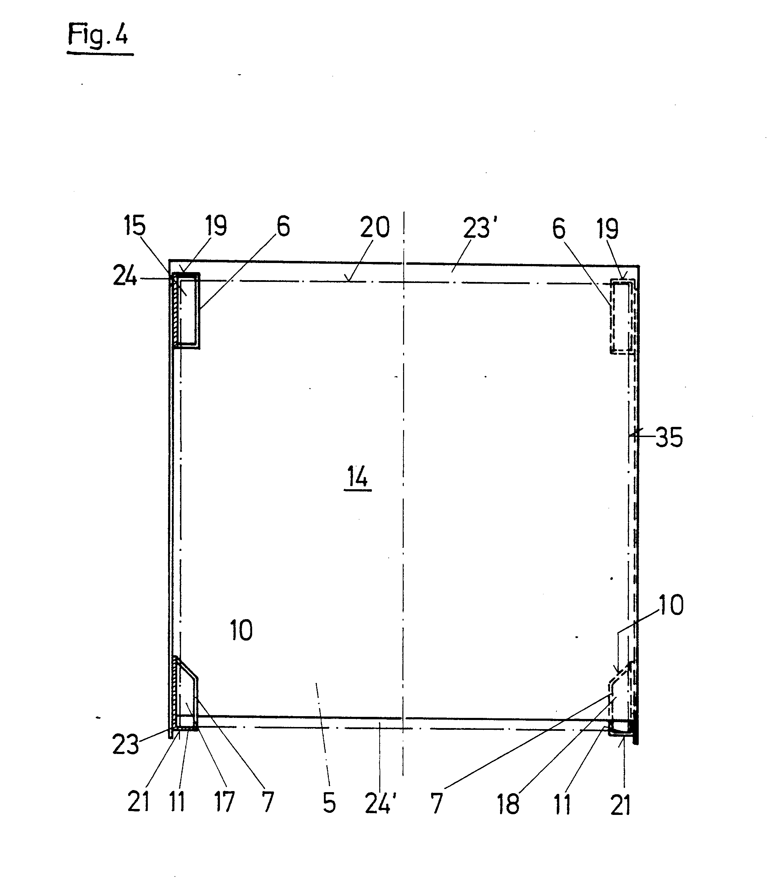

Beim Ausführungsbeispiel nach den Fig. 3 und 4 sind obere Rahmenteile 15 und 16 und unteren Rahmenteile 17 und 18 ebenfalls aus Blech-Biegeteilen gebildet, deren Biegelinien parallel zur Längsachse der Rahmenteile und senkrecht zur Katalysatorplattenfläche, die durch die Höhe und Breite B bestimmt ist, verlaufen. Die Rahmenteile 15 bis 18 blden hier Hohlkörper mit hoher Formstabilität. Die Führungsschlitze 6 und 7 sind so ausgbildet, wie dies bei den Fig. 1 und 2 beschrieben ist.

Die oberen Rahmenteile 15 und 16 weisen eine horizontale obere Fläche 19 auf, die über die obere Stirnkante 20 der Katalysatorplatten 5 hinaussteht. An den unteren Rahmenteilen 17 und 18 ist eine horizontale untere Fläche 21 ausgebildet, die zugleich die Auflager 11 bildet. Die Rahmenteile 15 bis 18 sind beidendig mit je einer Blechseitenwand 14 verbunden, die mit einer Abwinklung 22 um die Rahmenteile greift. Die Abwinklung 22 weist unten einen Fortsatz 23 und oben eine entsprechende Aussparung 24 auf. Dadurch sind zwei Halterahmen übereinander unverrückbar stapelbar (vgl. Fig. 3). Die unteren horizontalen Flächen 21 eines oberen Halterahmens stehen dabei auf den oberen horizontalen Flächen 19 auf. Die Katalysatorplatten 5 sind dadurch nicht belastet. Der Fortsatz 23 des oberen Halterahmens greift in die Aussparung 24 des unteren Halterahmens.

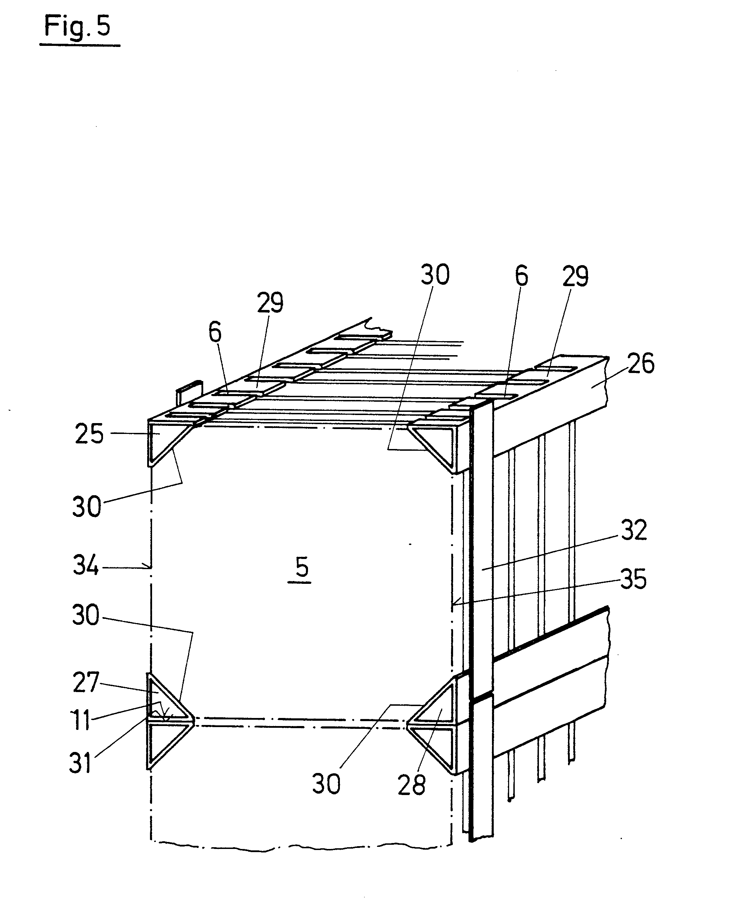

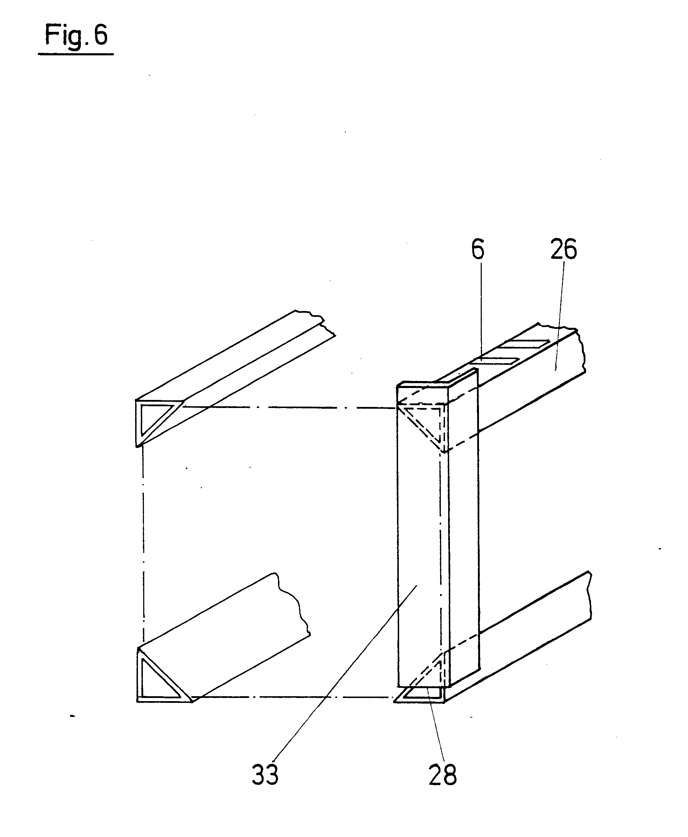

Beim Ausführungsbeispiel nach den Fig. 5 und 6 sind obere Rahmenteile 25 und 26 und untere Rahmenteile 27 und 28 als im Querschnitt rechtwinklig dreieckige Hohlkörper ausgebildet. Bei den oberen Rahmenteile 25 und 26 erstrecken sich die Führungsschlitze 6 in den Dreieckseiten 29 und 30. Bei den unteren Rahmenteilen 27 und 28 sind die Führungsschlitze 7 nur in der Dreieckseite 30 vorgesehen. Die Dreieckseite 31 dient als Auflager 11 für die Katalysatorplatten 5.

Die Rahmenteile 25 und 27 und 26 und 28 sind durch Leisten 32 miteinander verbunden, die durch einen Versatz (vgl. Fig. 5 und 6) die unverrückbare Stapelbarkeit der Halterahmen gewährleisten.

Beim Ausführungsbeispiel nach Fig. 6 ist anstelle der Leisten 32 ein Winkelstück 33 vorgesehen.

Bei den Ausführungsbeispielen nach den Fig. 1, 3 bis 5 sind die Katalysatorplatten 5 an ihren beiden gegenüberliegenden vertikalen Seitenrändern 34, 35 jeweils durch ein oberes und durch ein unteres Rahmenteil geführt. Da die Führungsschlitze 6, 7 mit ihren längeren Rändern an den durch Höhe und Breite bestimmten Oberflächen der Katalysatorplatten 5 anliegen, ist eine sichere Führung gewährleistet.

Die beschriebenen Halterahmen, insbesondere deren Rahmenteile, sind einfach herzustellen und weisen bei hoher Stabilität ein vergleichsweise geringes Gewicht auf. Die Halterahmen lassen sich vollautomatisch einfach dadurch bestücken, daß die Katalysatorplatten 5 von oben in die Führungsschlitze 6 bzw. 7 eingeführt werden, bis sie auf den Auflagern 11 aufstehen. Die Rahmenteile bilden zugleich seitliche Anschläge 38 für die Katalysatorplatten 5.

Die eingeschobenen Katalysatorplatten sind sicher gehalten. Jede Katalysatorplatte 5 ist für sich gehalten, ohne daß sie durch andere Katalysatorplatten oder durch den Halterahmen belastet ist.

Nach dem Bestücken von Halterahmen mit Katalysatorplatten lassen sich die Halterhamen zu größeren Katalysatoreinheiten stapeln. Um die Unverrückbarkeit gestapelter Halterahmen in beiden Richtungen zu gewährleisten, weist die Blechseitenwand 14 zusätzlich zum Fortsatz 23 und der zugeordneten Aussparung 24 einen weiteren fortsatz 23' auf, der über die obere Fläche 19 hinaussteht. Eine dementsprechende Aussparung 24' ist unten an der Seitenwand 14 vorgesehen (vgl. Fig. 3 und 4).

Im Rahmen der Erfindung liegen zahlreiche weitere Ausführungsbeispiele. Beispielsweise ist es möglich, Einzelmerkmale der beschriebenen Ausführungsbeispiele zu kombinieren. Bei den Ausführungsbeispielen nach den Fig. 5 und 6 sind die die Rahmenteile der Seitenränder 34 und 35 im richtigen Abstand haltenden Blechseitenwände 14 nicht dargestellt. Sie können so aufgebaut sein, wie dies bei den Fig. 1 bis 4 beschrieben ist.

## Ansprüche

1. Halterahmen zur blockartigen, parallelen Aufnahme mehrerer Katalysatorplatten im Abstand zueinander, dadurch gekennzeichnet, daß gegenüberliegende, entsprechend der Breite der Katalysatorplatten (5) beabstandete Rahmenteile (1 bis 4; 15 bis 18; 25 bis 28; 36) vorgesehen sind, die eine Reihe nach oben offener Führungsschlitze (6, 7) mit einer der Dicke der Katalysatorplatten (5) entsprechenden Breite aufweisen, daß Auflager (11) für die unteren Kanten der in den Führungsschlitzen (6, 7) stehenden Katalysatorplatten (5) unten an den Rahmenteilen (3, 4; 17, 18; 27, 28; 36) ausgeformt sind und daß die Rahmenteile (1 bis 4; 15 bis 18; 25 bis 28; 36) seitliche Anschläge (38) für die in den Führungsschlitzen (6, 7) stehenden Katalysatorplatten (5) bilden.

2. Halterahmen nach Anspruch 1, dadurch gekennzeichnet, daß sich beim Zusammenfügen mehrerer Rahmenteile (1 bis 4; 15 bis 18, 25 bis 28; 36) in Modulbauweise die Plattenzwischenräume zu Endlosschlitzen in alle vier Richtungen als Freipassage für ein durchströmendes gasförmiges Medium ausbilden.

3. Halterahmen nach Anspruch 1, dadurch gekennzeichnet, daß das Rahmenteil (1 bis 4; 15 bis 18; 25 bis 28) sich nur über einen Teil der Höhe der Katalysatorplatte (5) erstreckt und zwei Rahmenteile übereinander angeordnet und miteinander verbunden sind, wobei deren Schlitze (6, 7) fluchten und an dem unteren Rahmenteil (3, 4; 17, 18; 27, 28) die Auflager (11) ausgebildet sind.

4. Halterahmen nach einem der vorhergehenden Ansprüche, dadurch gekennzeichnet, daß das Rahmenteil (1 bis 4; 15 bis 18; 25 bis 28; 36) aus Blech gebogen ist, die Führungsschlitze (6, 7) durch Ausnehmungen des Blechs und die Anschläge (38) und Auflager (11) durch das Blech selbst gebildet sind.

5. Halterahmen nach Anspruch 4, dadurch gekennzeichnet, daß die Biegelinien des Rahmenteils (1 bis 4; 15 bis 18; 25 bis 28; 36) parallel zu dessen Längsachse und senkrecht zur Katalysatorplattenfläche verlaufen.

6. Halterahmen nach Anspruch 5, dadurch gekennzeichnet, daß das Rahmenteil (15 bis 18; 25 bis 28) als Hohlkörper ausgebildet ist.

7. Halterahmen nach Anspruch 6, dadurch gekennzeichnet, daß der Hohlkörper (25 bis 28) im Querschnitt dreieckförmig ist.

8. Halterahmen nach Anspruch 6, dadurch gekennzeichnet, daß der Hohlkörper (15 bis 18) im Querschnitt rechteckig ist.

9. Halterahmen nach einem der vorhergehenden Ansprüche 1 bis 5, dadurch gekennzeichnet, daß das Rahmenteil (1 bis 4; 36) im Profil U-förmig ausgebildet ist.

10. Halterahmen nach Anspruch 7, 8 oder 9, dadurch gekennzeichnet, daß eine horizontale Oberfläche (19) des bzw. des oberen Rahmenteils (1, 2; 15, 16; 25, 26; 36) über die obere Stirnkante (20) der Katalysatorplatte (5) hinaussteht und eine horizontale untere Fläche (19) des bzw. des unteren Rahmenteils (3, 4; 17, 18; 27, 28; 36) die Auflager (11) bildet.

11. Halterahmen nach einem der vorhergehenden Ansprüche, dadurch gekennzeichnet, daß sich die Führungsschlitze (6, 7) in einem oberen Bereich nach oben erweitern (12).

12. Halterahmen nach einem der vorhergehenden Ansprüche, dadurch gekennzeichnet, daß der Führungsschlitz (6, 7) mit seinen längeren Rändern die Katalysatorplatten (5) stützt und an seine Querränder die Anschläge (38) und Auflager (11) angrenzen.

13. Halterahmen nach einem der vorhergehenden Ansprüche, dadurch gekennzeichnet, daß am Halterahmen Seitenanschläge (23; 32; 33) zur unverrückbaren Stapelung mehrerer Halterahmen ausgebildet sind.

14. Halterahmen nach einem der vorhergehenden Ansprüche, dadurch gekennzeichnet, daß die Rahmenteile (1 bis 4; 15 bis 18; 25 bis 28; 36) einen Kasten bilden oder zu einem Kasten zusammengefügt sind.

15. Halterahmen nach einem der vorhergehenden Ansprüche, dadurch gekennzeichnet, daß die Rahmenteile (1 bis 4; 15 bis 18; 25 bis 28; 36) in dem der Breite (B) der Katalysatorplatten (5) entsprechenden Abstand durch Seitenwände (14) gehalten sind, an denen die Rahmenteile befestigt sind.

16. Halterahmen nach Anspruch 14 oder 15, dadurch gekennzeichnet, daß die Rahmenteile (1 bis 4; 15 bis 18; 25 bis 28; 36) an ihren in Längsrichtung liegenden Enden Laschen (13) aufweisen, die durch Ausnehmungen des Kastens oder der Seitenwand (14) gesteckt und umgebogen sind.

17. Halterahmen nach Anspruch 13 oder 15, dadurch gekennzeichnet, daß die Seitenanschläge (23, 23') an der Seitenwand (14) ausgebildet sind.

Fig. 1

Fig. 2

1'

2

14

13

13

13

Fig. 3

Fig.4

# Fig. 5

## Fig. 6